# EUROPEAN PATENT SPECIFICATION

(11) **EP 2 042 250 B1**
(45) Date of publication and mention of the grant of the patent: **03.05.2017**
(21) Application number: 08380075.5
(22) Date of filing: 07.03.2008
(51) Int. Cl.: B21J 15/50, B23B 47/28

(54) **Milling head with electro-mechanical milling depth control**
Fräskopf mit elektromechanischer Frästieferegelung
Tête à fraiser avec réglage electromecanique de la profondeur de fraisage

(30) Priority: 28.09.2007 ES 200702549
(43) Date of publication of application: 01.04.2009
(73) Proprietor: Airbus Operations S.L., 28906 Getafe, Madrid (ES)
(72) Inventor: Grille Sacaluga, Benito, 11012 Cadiz (ES); Astorga Ramírez, Juan Ramón, 11008 Cadiz (ES)
(74) Representative: Carpintero Lopez, Francisco

(56) References cited:
- WO-A-00/01504
- GB-A- 644 927
- US-A- 2 296 087
- US-A- 2 576 786

## Description

### OBJECT OF THE INVENTION

The invention refers to a head designed for milling or trimming the extra stem present after making a rivet, in order to prevent the extra stem from emerging with respect to the surface on which the rivet has been made, for this purpose the head of the rivet is taken as a trimming depth reference, so that the trimming is done with the same depth in each rivet, maintaining the established tolerance limits independently from the depth each rivet has been set in each piece; and its aim is to provide a mechanical trimming limit that establishes and ensures that the trimming depth is always the same, even though the element or the surface where the rivet is made is deformed. It also provides an electrical limit from which the head is retreat in order to practice a new trimming, In such a way that a noticeable increase in the performance of the operation is obtained.

The invention is applicable in any industrial sector that requires the trimming of the extra stem of different rivets made in a piece, and it is preferably applied to the aero-dynamic industry on blind rivets made to fix the airplanes' coating.

### BACKGROUND OF THE INVENTION

GB-A-644927 describes a rivet cutter for removing the projecting parts of a rivet head. US-A-2296087 describes an apparatus for drilling the heads of rivets so that the rivets can be removed. It comprises a driving member, having a driving shank for attachment to a power unit, and a body section having a bit receiving socket. The apparatus includes means for removable securing the bit in the socket and a non-rotating guide sleeve. In said sleeve it has a thrust bearing seat and an aperture through which the body section extends. There are means for limiting the longitudinal separating movement of the driving member and guide sleeve, an expansion spring surrounding the body section and interposed between a shoulder on said driving member and the thrust bearing. The rivet cutting having a bit guide at the end of said sleeve having a passage to receive and guide the bit secured in the socket of said driving member.

Also is prior art the Spanish Patent No. 200701064, which describes a milling head with a nozzle that includes a central hole that defines a mouth for the extra stem of a rivet, in order to trim or mill the different rivets made in one piece, in such a way that the mouth has an adequate dimension so that it rests on the surface of said head of the rivet so that after the trimming is done there is always the same amount of stem in each rivet being made. In this document, the milling tool is fixed to a displaceable element, in such a way that the milling moves towards the mouth at a length previously established by means of arranging a micro-metric limit with which when it touches a micro-switch, the head is removed and the trimming is finished. Additionally, the nozzle is situated on a support by means of a spring so that when the mouth is pressed against the surface of the rivet, after exceeding the force of the spring, the frame is displaced with respect to the milling tool, causing it to move forward.

The inconvenience of both of the documents cited above is that if the element on the surface where the trimming is being done is deformed, the head of the rivet may be trimmed when recovering from that deformation.

Likewise, when that deformation is being recovered while a simultaneous mechanization on the opposite face of the element and with another machine is taking place, as a result of the thrust there will also be damages in the head of the rivet from excess mechanization.

Additionally, if the work depth is increased due to a variation in the length of the stem, it is necessary to re-adjust the micro-switch location to adapt it to the new length.

Also, these configurations do not allow an optimal control of the wear of the milling tool and of the vibrations the milling tool causes when trimming that may cause its breaking.

### DESCRIPTION OF THE INVENTION

In order to achieve the objectives and solve the drawbacks stated above, the invention has developed a new milling head, which like the one described in the prior art, includes a nozzle with a central hole that defines a mouth or inlet for introducing of the extra stem of the rivet, and which faces a milling tool to trim the stem of the different rivets made on the piece. Additionally, the mouth has an adequate dimension to be supported on the surface of said head of the rivet, in such a way that after trimming there is always the same amount of stem in each rivet made. It also includes at least a micro-metric limit contacting a micro-switch in order to retreat of the head and start a new trimming; all this is controlled by a robot.

The most important novelty of the present invention is the fact that the milling tool is fixed by means of a trimming compensation spring and the nozzle is fixed with a separation height with respect to the milling tool, which is the same as the trimming height, so that when the trimming starts, the mouth is separated from the surface of the head of the rivet said trimming height in such a way that the mouth determines a mechanical trimming depth limit when contacting the surface of the head of the rivet.

Thus, allowing distinguishing the trimming parameters according to the size of the rivet.

The great advantage of this configuration is that the mechanical limit ensures that the trimming depth is always the same, independent from any deformation that the element or the surface upon which the rivet is placed may have and may recover during trimming.

Also, another big advantage of this configuration is that the milling tool is floating due to the location of the spring, and it is controlled by this spring so as to have means for absorbing the vibrations due to trimming, which causes greater durability in the tool and an improved trimming quality.

Another feature of the invention is the fact that the nozzle is adjustable in height, so that in allows establishing the trimming height, which allows easy modification of the trimming height, when required, as in the case where different types of rivets are used with longer or shorter stems.

The invention also includes the micro-metric limit and the micro-switch to be placed so that once the mouth contacts the surface of the head of the rivet, the milling tool continues moving forward due to the action of the spring and being absorbed by it, until the micro-switch is activated and the head is retreat to make a new rivet.

The great advantage of this configuration is that the mechanical limit guarantees that the trimming is done at the correct height/depth, and the electrical limit finishes the trimming cycle and the tool is retreat.

The structure of the above-described head determines a notably save in time.

Additionally, the milling tool can be dismantling on a support that is aided by the spring, which allows the milling tool to be resharpened for reusing it, resulting in stocks savings.

Therefore, the tool is less expensive.

Below, in order to facilitate a better understanding of this specification and forming an integral part thereof, a series of figures are attached in which, on an illustrative rather than limiting basis, the most characteristic details of the inventive object have been represented.

### BRIEF DESCRIPTION OF THE FIGURES

**Figure 1****.-** Shows a schematic view of a possible example of embodiment of the invention in which the head is in position to start trimming a stem.

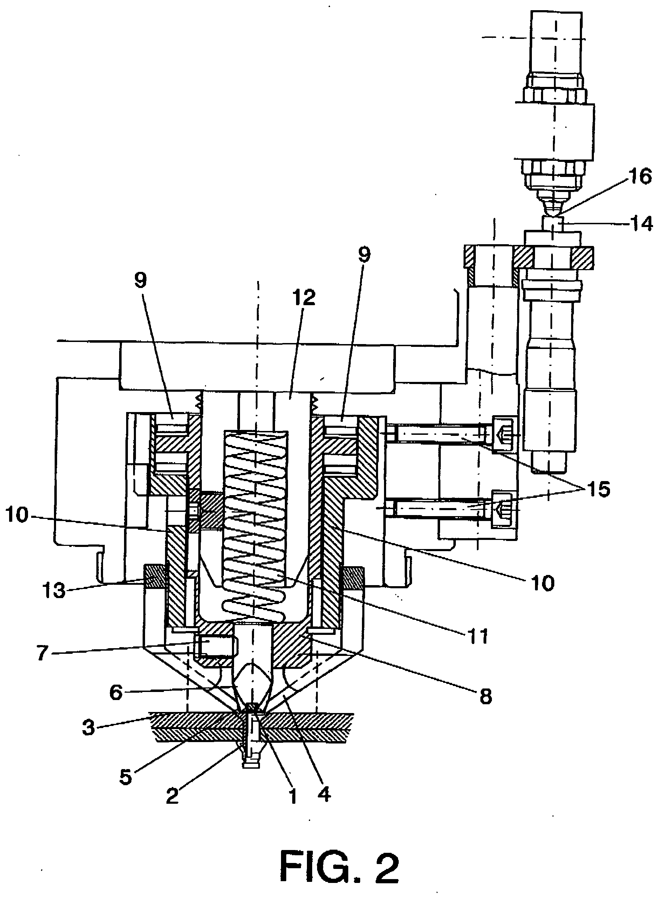

**Figure 2****.-** Shows a view equivalent to that of the previous figure where the trimming of the stem has finished.

### DESCRIPTION OF THE PREFERRED EMBODIMENT

Given below is a description of the invention based on the figures commented upon above.

The head of the invention, as expressed in the statement, is mounted on a device known as tricepts which is controlled by a robot (not represented as they are not subject-matter of the present invention) to trim a rivet (2) extra stem (1) on an piece or surface (3).

The head has a nozzle (4) which includes a central hole that defines a mouth Or inlet (5), in front of which is a milling tool (6) that, by means of a screw (7), is fixed on a rotating support (8) on a fixed piece (10), and for this purpose it includes some bearings (9).

Also, the rotating support (8) is aided by a spring (11) with the help of a piece (12).

The nozzle (4) is anchored on the fixed piece (10) such that it is height adjustable with respect to the piece by means of a thread (13).

Also, a micro-metric limit (14) is fixed on the head by means of some screws (15), so that said micro-metric limit (14) faces a micro-switch (16).

By means of the thread (13), the separation between the milling tool (6) and the mouth (5) is regulated, in such a way that said separation corresponds to the height or depth of the trimming corresponding to the height of the stem (1).

The dimensions of the mouth (5) are the same or smaller than that of the surface (17) of the head of the rivet (2) to allow the mouth (5) to rest on the surface (17) as it will be described.

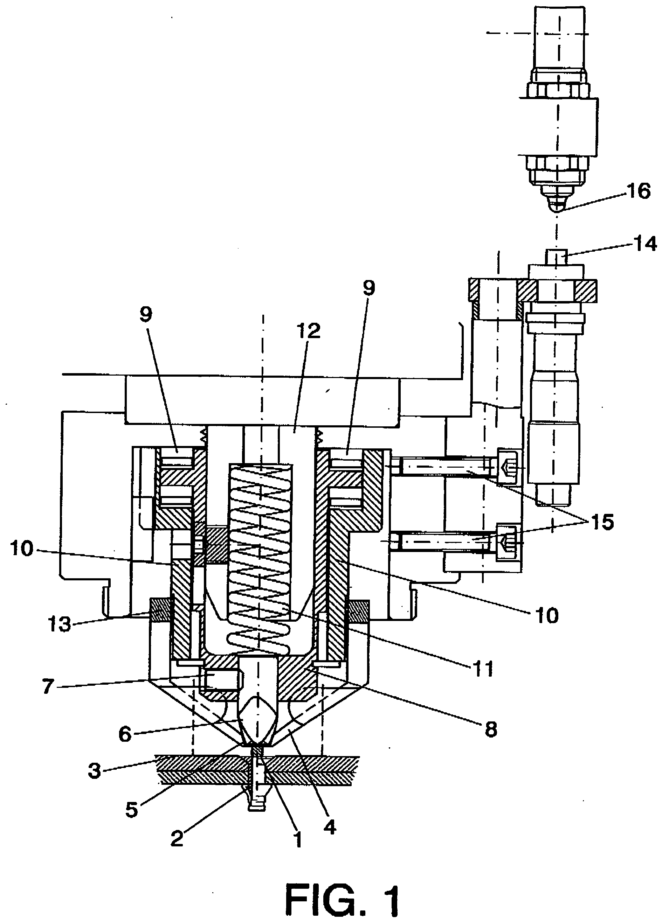

Based on the previous description, it is easily understood that after placing the nozzle (4) with the corresponding separation at the height of the stem (1), different rivets can be trimmed, for this purpose the robot places the head so that the mouth (5) is put in front of the stem (1) and then moves forward towards said stem (1), starting the trimming by the action of said forward movement, as shown in figure 1. In the trimming process, the spring (8) allows the milling tool (6) to float, in such a way that there is a compensation of the forward movement of the milling tool due to the force of the spring (11), until the mouth (5) contacts the surface (17) of the head of the rivet (2), establishing a mechanical limit for the milling depth, since as described, the separation or height between the milling tool (6) and the mouth (5) correspond to the height of the stem (1).

The mechanical limit maintains the forward movement controlled by means of the spring, and which is absorbed by it, and following the contact of the micro-switch (16) with the limit (14) occurs, which determines that the tool is quickly retreat to be placed on a new rivet by means of the control of the robot. For this, the separation between the micro-metric limit (14) and the micro-switch (16) should be appropriate to allow this function.

These configuration and operation mode have the advantages that were already mentioned in the description of the invention section.

## Claims

1. **MILLING HEAD IN TRICEPTS WITH ELECTRO-MECHANICAL DEPTH CONTROL** comprising a nozzle (4) with a central hole that defines a mouth (5) to insert the extra stem (1) of a rivet (2), and in front of which includes a milling tool (6) to trim the stem (1) of the different rivets (2) made on a piece; the milling tool (6) is fixed by means of a trimming compensation spring (11) and the nozzle (4) is fixed at a separation height with respect to the milling tool (6) which is the same as the trimming depth, so that the mouth determines a mechanical limit of the trimming depth when touching the surface (17) of the head of the rivet (2), **characterised in that**:
- the mouth (5) has the same or smaller dimensions than the surface (17) of the head of the rivet (2) to allow the mouth (5) to rest on the surface (17);
- the milling head in tricepts with electro-mechanical depth control including at least one micro-metric limit (14) that touches a micro-switch (16) to retreat the head and start a new trimming;
- the micro-metric limit (14) and the micro-switch (16) are positioned in such a way that once the mouth (5) touches the surface (17) of the head of the rivet (2), the forward movement of the milling tool (6) continues by the action of the spring (11), and it is absorbed by it until the micro-switch (16) is activated; and,
- the whole being controlled by a robot.

2. **MILLING HEAD IN TRICEPTS WITH ELECTRO-MECHANICAL DEPTH CONTROL,** according to claim 1, **characterised in that** the nozzle (4) is height adjustable to establish the trimming depth.

3. **MILLING HEAD IN TRICEPTS WITH ELECTRO-MECHANICAL DEPTH CONTROL,** according to claim 1, **characterised in that** the milling tool (6) is dismantling on a rotating support (8), which is aided by the spring (11).

## Patentansprüche

1. Fräskopf in "Tricepts" mit elektromechanischer Tiefensteuerung, der eine Düse (4) mit einer Mittelbohrung aufweist, die eine Mündung (5) definiert, um den Extraschaft (1) eines Niet (2) einzuführen, und davor ein Fräswerkzeug (6) umfasst, um den Schaft (1) der unterschiedlichen Niete (2), die an einem Teil ausgebildet sind, zu bearbeiten; wobei das Fräswerkzeug (6) mittels einer Bearbeitungskompensationsfeder (11) befestigt ist und die Düse (4) bei einer Trennhöhe in Bezug auf das Fräswerkzeug (6), die gleich der Bearbeitungstiefe ist, befestigt ist, so dass die Mündung eine mechanische Begrenzung der Bearbeitungstiefe bestimmt, wenn sie die Oberfläche (17) des Kopfes des Niets (2) berührt, **dadurch gekennzeichnet, dass**:
- die Mündung (5) gleiche oder kleinere Abmessungen als die Oberfläche (17) des Kopfes des Niets (2) besitzt, damit die Mündung (5) auf der Oberfläche (17) ruhen kann;
- der Fräskopf in "Tricepts" mit elektromechanischer Tiefensteuerung wenigstens eine mikrometrische Begrenzung (14) aufweist, die einen Mikroschalter (16) berührt, um den Kopf zurückzuziehen und eine neue Bearbeitung zu beginnen;
- die mikrometrische Begrenzung (14) und der Mikroschalter (16) in der Weise positioniert sind, dass, sobald die Mündung (5) die Oberfläche (17) des Kopfes des Niets (2) berührt, die Vorwärtsbewegung des Fräswerkzeugs (6) durch die Wirkung der Feder (11) fortgesetzt wird und durch diese absorbiert wird, bis der Mikroschalter (16) aktiviert wird; und
- alles durch einen Roboter gesteuert wird.

2. Fräskopf in "Tricepts" mit elektromechanischer Tiefensteuerung nach Anspruch 1, **dadurch gekennzeichnet, dass** die Düse (4) in der Höhe einstellbar ist, um die Bearbeitungstiefe einzustellen.

3. Fräskopf in "Tricepts" mit elektromechanischer Tiefensteuerung nach Anspruch 1, **dadurch gekennzeichnet, dass** das Fräswerkzeug (6) auf einem rotierenden Träger (8) abmantelt, was durch die Feder (11) unterstützt wird.

## Revendications

1. Tête à fraiser dans un Tricept avec un réglage électromécanique de la profondeur comprenant une buse (4) avec un trou central qui définit une embouchure (5) pour insérer la tige supplémentaire (1) d'un rivet (2), et devant laquelle se trouve un outil de fraisage (6) pour couper la tige (1) des différents rivets (2) réalisés sur une pièce; où l'outil à fraiser (6) est fixé au moyen d'un ressort de compensation de coupe (11) et où la buse (4) est fixée à une hauteur de séparation par rapport à l'outil à fraiser (6) qui est identique à la profondeur de coupe, de sorte que la bouche détermine une limite mécanique de la profondeur de coupe en touchant la surface (17) de la tête du rivet (2), **caractérisée en ce que**
- la bouche (5) a une dimension identique ou plus petite que la surface (17) de la tête du rivet (2) pour permettre la bouche (5) de reposer sur la surface (17);
- la tête à fraiser dans un Tricept avec un réglage électromécanique de la profondeur comprend au moins une limite micrométrique (14) qui touche un micro-interrupteur (16) pour reculer la tête et commencer un nouveau découpage;
- la limite micrométrique (14) et le micro-interrupteur (16) sont positionnés de telle sorte qu'une fois que l'embouchure (5) touche la surface (17) de la tête du rivet (2), le mouvement vers l'avant de l'outil à fraiser (6) se poursuit par l'action du ressort (11) et il est absorbé par celui-ci jusqu'à ce que le micro-interrupteur (16) soit activé ; et,
- tout cela étant contrôlé par un robot.

2. Tête à fraiser dans un Tricept avec un réglage électromécanique de la profondeur selon la revendication 1, **caractérisée en ce que** la buse (4) est réglable en hauteur pour établir la profondeur de coupe.

3. Tête à fraiser dans un Tricept avec un réglage électromécanique de la profondeur selon la revendication 1, **caractérisée en ce que** l'outil à fraiser (6) est démonté sur un support rotatif (8), aidé par le ressort (11).
